# EUROPEAN PATENT SPECIFICATION

(11) **EP 2 249 151 B1**
(45) Date of publication and mention of the grant of the patent: **05.09.2012**
(21) Application number: 09425166.7
(22) Date of filing: 30.04.2009
(51) Int. Cl.: G01N 29/04, G01H 1/10, G01L 5/00, G01N 3/56, F01D 21/00, G01M 5/00

(54) **Method and device for measuring the wear of blades**
Verfahren und Vorrichtung zum Messen vom Verschleiß einer Schaufel
Procédé et dispositif de mesure de l'usure d'une aube

(43) Date of publication of application: 10.11.2010
(73) Proprietor: AVIO S.p.A., 10040 Torino (IT)
(72) Inventor: Destefanis, Angelo, 10137 Torino (IT); Grillo, Rosario, 10144 Torino (IT); Bellini, Paolo, Loveland, OH 45140 (US)
(74) Representative: Bongiovanni, Simone

(56) References cited:
- EP-A1- 0 426 527
- GB-A- 2 425 764
- US-A- 4 916 942
- US-A- 5 696 324
- US-A1- 2002 157 471
- US-B2- 6 629 463

## Description

The present invention relates to a method and device for measuring blade wear in a turbomachine; the blades being of the type comprising a sector, commonly named shroud, integrally connected to its free end.

Using a measuring device having an end cam, which is introduced between a pair of adjacent blades, is known for measuring the wear of the pair itself of adjacent blades in a turbomachine, in particular for measuring the wear of facing surfaces in reciprocal contact of the sectors integral with said blade pair. Once inserted, the cam is rotated so as to space out the two blades, and the elastic deformation obtained for a certain twisting torque applied to the cam provides a blade wear rate. For example, US4916942 describes a measuring device of the above-described type.

The known measuring device of the above-described type has the drawback of not allowing repetitive measurements because it does not allow to keep constant the insertion point of the cam between the blades of each pair of blades taken into consideration.

It is the object of the present invention to provide a method and device for measuring the blade wear in a turbomachine, which is free from the above-described drawback.

It is a further object of the present invention to in a turbomachine, which allows to systematically measure the wear of the blades in a turbomachine without requiring the turbomachine itself to be disassembled.

According to the present invention, a method for measuring the blade wear in a turbomachine is provided as set forth in claim 1, and preferably in any one of the subsequent claims either directly or indirectly depending from claim 1.

According to the present invention, a device for measuring the wear of blades is further provided as set forth in claim 9, and preferably in any one of the subsequent claims either directly or indirectly depending from claim 9.

The invention will now be described with reference to the accompanying drawings illustrating non-limitative embodiments thereof, in which:
- figure 1 is a perspective view of a preferred embodiment of the device of the present invention, the device being illustrated as coupled to a turbomachine;
- figure 1a is a plan view, on enlarged scale, of a first detail of figure 1;
- figure 2 is a perspective view, on enlarged scale, of a second detail of figure 1;
- figure 3 is a plan view, on enlarged scale, of the second detail of figure 1; and
- figure 4 is similar to figure 1 and shows a variant of the device of the present invention.

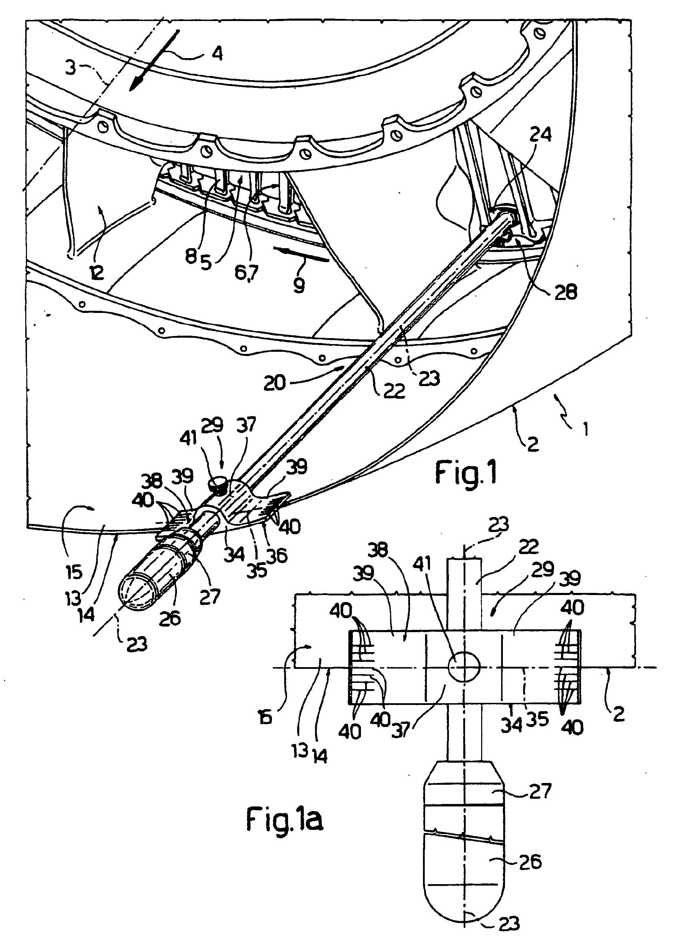

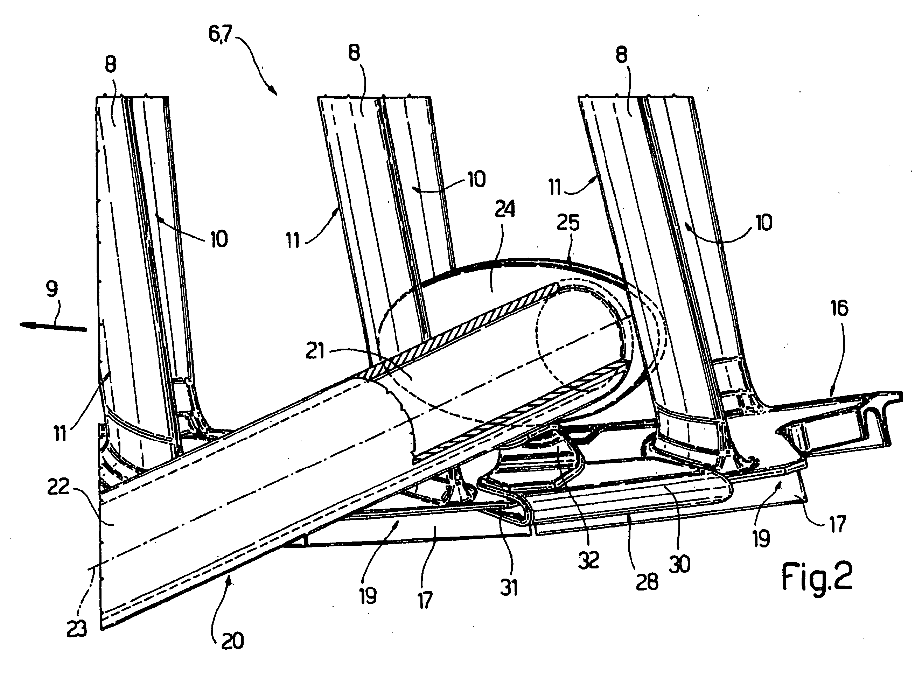

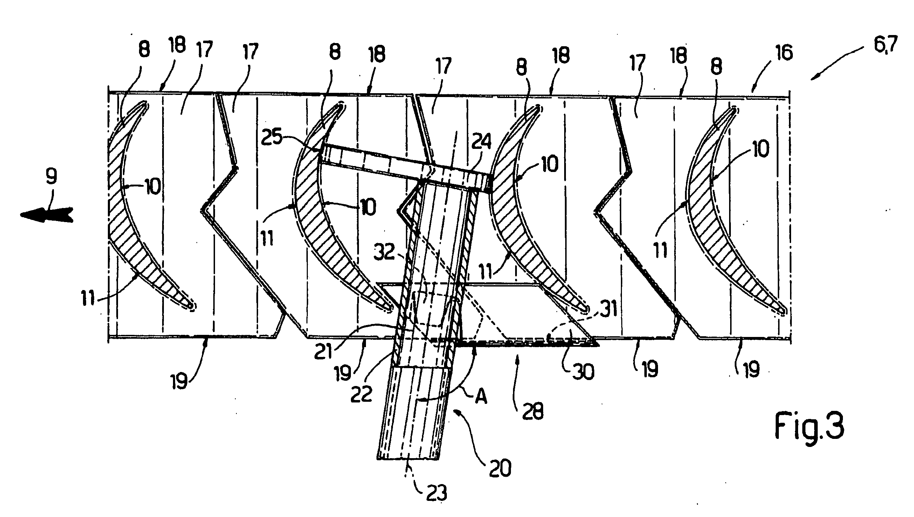

In figure 1, numeral 1 indicates as a whole a turbomachine, in particular an aircraft jet engine, comprising a tubular exhaust cone 2 having an axis 3 parallel to a feeding direction 4 of the air through the turbomachine 1 itself, and a turbine 5 coaxial to the axis 3 and comprising a trailing stage 6, which comprises a crown 7 of blades 8 mounted to rotate about the axis 3 in a direction 9 (clockwise in figure 1), and wherein each blade 8 has (figures 2 and 3) a rear concave profile 10 and a front convex profile 11 relatively to the direction 9.

The turbomachine 1 further comprises an exhaust diffuser 12 arranged immediately downstream of the trailing stage 6 in the direction 4 and in a position coaxial to the axis 3; furthermore, the exhaust cone 2 protrudes downstream of the diffuser 12 in the direction 4 and has an annular trailing edge 14, coaxial to the axis 3 and arranged on a plane perpendicular to the axis 3 itself, and is internally limited by a tubular surface 15.

The crown 7 comprises an outer ring 16, which consists of a plurality of sectors 17, each of which is integral with the free end of a respective blade 8 and is limited by a leading edge 18 and a trailing edge 19, substantially transversal to the direction 4.

In a turbomachine 1 of the above-described type and as shown in figure 1, the wear state of the sectors 17 of the crown 7 is measured, without requiring to extract the turbine 5 from the turbomachine 1, by a measuring device 20, which, in order to carry out a wear measurement, takes into consideration one pair of adjacent blades 8 at a time and is inserted from the trailing end of the exhaust cone 2 and engaged in the space between the two blades 8 of the chosen pair of adjacent blades 8.

The mentioned wear measurement is repeated for a number of pairs of adjacent blades 8 of the crown 7 and, possibly, for all the pairs of adjacent blades 8.

The measuring device 20 comprises a shaft 21, which is mounted through a rigid tubular sheath 22 in order to rotate, with respect to the sheath 22, about an axis 23 thereof, which coincides with the axis of the sheath 22. The shaft 21 carries an integrally connected cam 24 at one end thereof protruding outwards from the sheath 22, which cam 24 is adapted to be wedged, in use, between a pair of adjacent blades 8 and is substantially elliptical cylinder-shaped. The cam 24 is firmly connected to the shaft 21 in an eccentric position with respect to the axis 23, extends on a plane perpendicular to the axis 23 and is laterally limited by a substantially elliptical cam-like surface 25 adapted to come in contact with the concave profile 10 of a blade 8 on one side, and with the convex profile 11 of the adjacent blade 8 of the pair of blades 8 taken into consideration, on the other.

The end of the shaft 21 opposite the one carrying the cam 24 also protrudes into the sheath 22 and carries an operating handle 26 connected at a free end thereof, to which a torquemeter 27 is connected, in particular a torque wrench.

The measuring device 20 comprises a positioning device 28 and a positioning device 29, which are adapted to fix and place the device 20 with respect to the turbomachine 1 during the measurement. Both devices 28 and 29 are arranged outside the sheath 22, on the same side as the sheath 22 with respect to axis 23.

In particular, the positioning device 28 is integrally connected to the end of the sheath 22 facing the cam 24 and comprises a U-shaped bracket 30, which is arranged with its concavity facing the cam 24 and is limited by an inner bottom surface 31, which forms a certain angle A with the axis 23, the size of which is close to 90°. The positioning device 28 further comprises a spacer 32, which is interposed between the bracket 30 and the sheath 22 in order to integrally connect the sheath 22 and the bracket 30 to each other and to keep the bracket 30 at a distance apart from the outer surface of the sheath 22.

As shown in figure 1, the positioning device 29 is crossed by the sheath 22 and is adapted to maintain the sheath 22 itself at a distance apart from the inner surface 15 of the exhaust cone 2.

The positioning device 29 comprises a resting plate 34 which has a longitudinal axis 35 substantially transversal to the axis 23 of the sheath 22 and is limited at the bottom by a resting surface 36. The positioning device 29 further comprises, in an intermediate position with respect to the longitudinal extension thereof, an annular body 37 integrally connected to the resting plate 34, in particular connected to an upper surface 38 of the resting plate 34, so as to have a longitudinal axis thereof coaxial to the axis 23 of the sheath 22.

Said annular body 37 splits the resting plate 24 into two side portions 39, symmetric to each other with respect to the annular body 37 itself.

As shown in figure 1a, a plurality of notches 40 exists on the upper surface 38 of each portion 39 which are parallel to the axis 35 of the resting plate 34; a notch 40 of a portion 39 with a notch 40 of the other portion 39 is preferably adapted to form a pair of notches 40 aligned to each other with respect to an axis parallel to the axis 35.

The annular body 37 is crossed by the sheath 22 and is connected thereto so as to be able to longitudinally translate and rotate with respect to the axis 23 of the sheath 22 itself; the annular body 37 comprises, at its periphery, a threaded hole which radially extends through the annular body 37 itself, and in which an adjustment screw 41 is inserted, which is adapted, once screwed in, to be in contact with the annular body 37 and the sheath 22 at the same time, and to exert a tightening force such as to integrally connect the positioning device 29 and the sheath 22 to each other, thus preventing the positioning device 29 itself from translating and rotating to the periphery of the sheath 22.

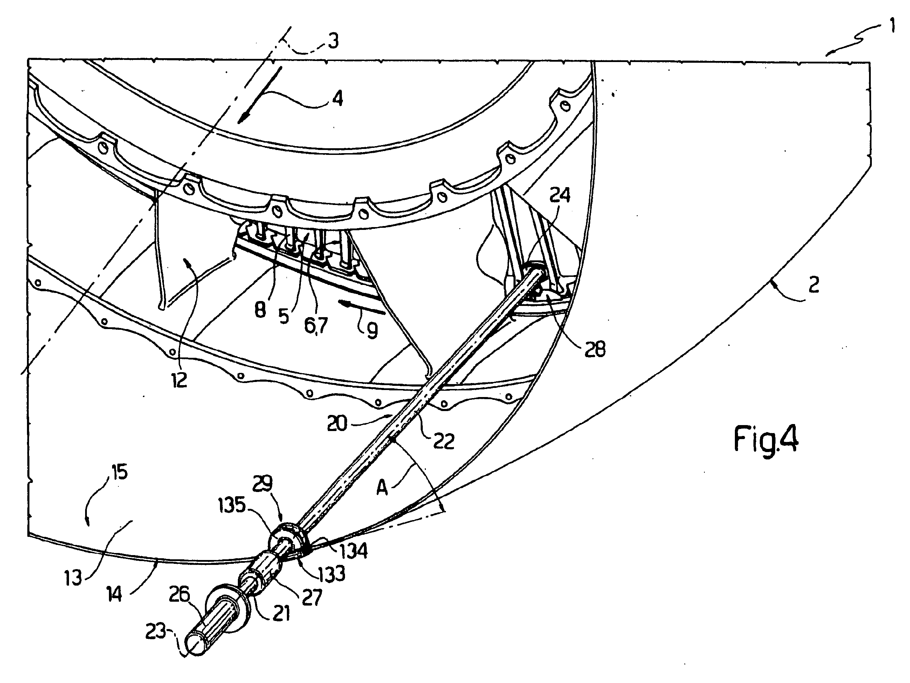

According to a constructional variant (figure 4), the positioning device 29 is integrally connected to the end of the sheath 22 facing the torque wrench 27 and comprises a U-shaped bracket 133, which is arranged with its concavity facing the cam 24 and is limited by an inner bottom surface 134, which is parallel to the inner bottom surface 31 of the bracket 30 and forms a certain angle equal to the angle A with the axis 23. The positioning device 29 further comprises an annular shaped spacer 135, which is crossed by the sheath 22, integrally connects the sheath 22 and the bracket 133 to each other, and keeps the bracket 133 at a distance apart from the outer surface of the sheath 22.

In use, the measuring device 20 is fitted on the turbomachine 1 from the outside by arranging the measuring device 20 itself so as to insert the cam 24 between the blades 8 of one pair of adjacent blades 8 of the crown 7, in particular the cam 24 is inserted having its larger diameter substantially arranged parallelly to the longitudinal extension of the blades 8 themselves.

At the same time, the measuring device 20 is arranged so as to fit the bracket 30 onto the outer ring 16 in the space between two adjacent blades 8; the bracket 30 is pushed towards the crown 7 to take its inner surface 31 in contact, over its entire length, with the trailing edge 19 of the sectors 17 concerned by the bracket 30 itself.

The positioning device 29 is then aligned to the trailing edge 14 of the exhaust cone 2 by aligning two corresponding notches 40 of the two portions 39 of the resting plate 34 to the trailing edge 14 itself. After the above-described alignment, the adjustment screw 41 is tightened to integrally connect the positioning device 29 and the sheath 22 to each other in their assigned position.

As previously mentioned, the positioning device 29 may longitudinally slide on the sheath 22, and thereby the measuring device 20 may be easily used to conduct measurements on turbomachines of different sizes, by adjusting the position of the positioning member 29 itself with respect to the sheath 22 each time according to the longitudinal extension of the exhaust cone 2 of the turbomachine 1 under examination.

Once the measuring device 20 has been mounted in the above-described manner, a rotation is imparted to the shaft 21 by means of the handle 26, so as to space out the two blades 8 of the pair of adjacent blades by elastic deformation to identify the maximum torque required to space out said adjacent blades 8.

The amount of maximum twisting torque required to space out the adjacent blades 8 is measured by the torquemeter 27 and the lower the applied twisting torque, the higher the wear of the reciprocally facing surfaces of the respective sectors 17.

The assembly of the variant of the positioning device 20 shown in figure 4 is similar to the previously described assembly, with the difference that while the bracket 30 of the positioning device 28 is fitted on the external ring 16, the bracket 133 of the positioning device 29 is fitted on the exhaust cone 2; and, both brackets 30 and 133 are simultaneously pushed towards the crown 7 to take the inner bottom surfaces 31 and 134 thereof in contact with the corresponding trailing edges 19 and 14 of the outer ring 16 and exhaust cone 2, respectively.

The operation may be repeated for a number of pairs of adjacent blades 8 of the crown 7 and, possibly, for all the pairs of adjacent blades 8. The reuse or replacement of the blades 8 is determined by means of a certain correlation between the torque values and the wear of the facing surfaces of two adjacent sectors 17.

With regards to the above disclosure, it should be noted that the devices 28 and 29 allow to fit the measuring device 20 on the turbomachine 1 in a position and with an orientation which are determined and remain constant for the all the measurements which are carried out on the crown 7 for each pair of blades 8. In other words, the devices 28 and 29 not only facilitate the use of the measuring device 20 thus keeping it fixed with respect to the turbomachine 1, but act as reference members, thus allowing reciprocally comparable, repetitive measurements of the deformations of the pairs of blades 8 engaged by the cam 24.

Furthermore, it should be noted that the measuring device 20 may be used to determine the degree of wear of the blades 8 of a crown 7 of the trailing stage 6 of a turbine 5, e.g. a turbine 5 mounted inside a turbomachine 1 of an aircraft, without requiring to disassemble the turbine 5 itself.

## Claims

1. A method for measuring the wear of blades (8) in a turbomachine (1), each blade (8) comprising a respective sector (17) connected to its free end; the method comprising the steps of:
- inserting a flat cam (24), which pivots about an axis (23) normal to a plane of the cam (24) itself, between the blades (8) of a pair of adjacent blades (8) of a crown of blades (8) of a stage (6) of the turbomachine (1); the method being **characterized by** the steps of:
- blocking said axis (23) in a certain position through positioning means (28,29) and with a certain orientation with respect to the blades (8) of said pair;
- rotating the cam (24) about said axis (23) to take an active surface (25) of the cam (24) itself in contact with both blades (8) of said pair;
- imparting a rotation to the cam (24) about said axis (23) to space out the blades (8) of said pair by elastic deformation;
- measuring the applied twisting torque; and
- putting the applied torque and the wear of the blades (8) of said pair of blades (8) into reciprocal relationship; wherein the lower is the applied twisting torque, the higher is the wear of the reciprocally facing surfaces of the respective sectors (17).

2. A method according to claim 1, wherein a twisting torque is imparted to the cam (24) by means of a shaft (21) coaxial to said axis (23) and having a first free end integral with the cam (24) itself; the twisting torque being measured by means of a torquemeter (27).

3. A method according to claim 2, wherein the step of blocking said axis (23) in a certain position and with a certain orientation with respect to the blades (8) of said pair is obtained by blocking, in said position and with said orientation, a tubular coating sheath (22) in a portion of the shaft (21) between the cam (24) and the torquemeter (27); the shaft (21) being coupled to the sheath (22) to rotate about said axis (23).

4. A method according to claim 3, wherein blocking the sheath (22) in said position and with said orientation is achieved by means of first and second positioning devices (28, 29), which are carried by the sheath (22) and are applied in use to first and second supports, respectively, which are fixed with respect to the blades (8) during the measurement.

5. A method according to claim 4, wherein the first supporting means is defined by a pair of adjacent sectors (17) of a ring (16) of the crown (7) coaxial to an axis (3); the first positioning device (28) comprising a U-shaped bracket (30) arranged with its concavity facing the cam (24) and having an inner bottom surface (31); and the first positioning device (28) being coupled to the ring (16) by taking said bottom surface (31) in contact with a trailing edge (19) of the ring (16) itself.

6. A method according to claim 5, wherein the second supporting means is defined by an annular body (2) arranged outside the crown (7) and having an annular trailing edge (14) coaxial to the axis (3) and arranged on a plane perpendicular to the axis (3) itself; and the second positioning device (29) comprising a resting plate (34) having a longitudinal axis (35) and an upper surface (38) on which a plurality of pairs of notches (40) are arranged parallel to the axis (35); and the second positioning device (29) being aligned by means of the notches (40) to the annular trailing edge (14) of the annular body (2) itself.

7. A method according to claim 6, wherein the second positioning device (29) may translate along the sheath (22) and, once aligned with the annular trailing edge (14) of the annular body (2), is integrally connected to the sheath (22) itself by means of an adjustment screw (41).

8. A method according to claim 5, wherein the second supporting means is defined by an annular body (2) arranged outside the crown (7) and having an annular trailing edge (14) coaxial to the axis (3) and arranged on a plane perpendicular to the axis (3) itself; the second positioning device (29) comprising a U-shaped bracket (133) arranged with its concavity facing the cam (24) and having an inner bottom surface (134); and the second positioning device (29) being coupled to said annular body (13) by taking said bottom surface (134) in contact with the annular trailing edge (14) of the annular body (13) itself.

9. A device for measuring, when in use, the wear of blades (8) of a turbomachine (1) with at least a stage (27) comprising a crown of blades, each blade (8) comprising a respective sector (17) connected to its free end; the device comprising a shaft (21); a sheath (22) covering part of the shaft (21), which is pivotally coupled to the sheath (22) in order to rotate, with respect to the sheath (22), about an axis (23) thereof coaxial to the sheath (22); a cam (24) transversal to said axis (23) and integral with a first end of the shaft (21) protruding from the sheath (22), whereby the cam (24) is firmly connected to the shaft (21) in an eccentric position with respect to the axis (23), extends on a plane perpendicular to the axis (23) and is laterally limited by a substantially elliptical cam-like surface (25) and is adapted to be arranged, when in use, between the blades (8) of a pair of adjacent blades (8) of a crown (7) of blades (8) of a stage (6) of the turbomachine (1); and a torquemeter (27) and an operating member (26) carried by a second end of the shaft (21) protruding from the sheath (22); the device being **characterized in that** it comprises positioning means (28, 29) integral with the sheath (22) and adapted to be coupled to outer supporting means in order to keep, in use, the device (20) itself in a certain position and with a certain orientation with respect to said pair of blades (8).

10. A device (20) according to claim 9, wherein the positioning means comprise first and second positioning devices (28, 29) carried by the sheath (22).

11. A device (20) according to claim 10, wherein each positioning device (28; 29) is shaped so as to be able to be applied to the corresponding fixed support and has a reference surface (31; 36; 134) adapted to come in contact with the corresponding fixed support to impart a certain position and a certain orientation to the sheath (22) with respect to the blades (8) of the pair of blades (8), the wear of which it is intended to be determined.

12. A device (20) according to claim 11, wherein the positioning device (28) comprises a U-shaped fastening member (30) which is adapted to be fitted onto the corresponding fixed support; said reference surface being an inner bottom surface (31) of the fastening member (30).

13. A device (29) according to claim 11, wherein the positioning device (29) comprises a resting plate (34) having a plurality of pairs of notches (40) for aligning the resting surface (36) thereof to the corresponding fixed support.

14. A device (20) according to claim 11, wherein the positioning device (29) comprises a U-shaped fastening member (133) which is adapted to be fitted on the corresponding fixed support; said reference surface being an inner bottom surface (134) of the fastening member (133).

15. A device (20) according to claim 11, wherein each positioning device (28; 29) comprises a corresponding spacer (32; 37; 135).

## Patentansprüche

1. Verfahren zum Messen des Verschleißes einer Laufschaufel (8) in einer Turbomaschine (1), wobei jede Laufschaufel (8) einen mit deren freien Ende verbundenen zugehörigen Abschnitt (17) aufweist, wobei das Verfahren die Schritte umfasst:
- Einführen einer flachen Nockenscheibe (24) zwischen die Laufschaufeln (8) eines Paares benachbarter Laufschaufeln (8) einer Krone von Laufschaufeln (8) einer Stufe der Turbomaschine, wobei die Nockenscheibe (24) um eine senkrecht zu einer Ebene der Nockenscheibe (24) orientierten Achse (23) dreht; **gekennzeichnet durch** die Verfahrensschritte:
- Blockieren der Achse (23) in einer bestimmten Position mittels Positioniermitteln (28, 29) und mit einer bestimmten Orientierung bezüglich der Laufschaufeln (8) des Paars;
- Rotieren der Nockenscheibe (24) um die Achse (23), um eine aktive Oberfläche (25) der Nockenscheibe (24) in Kontakt mit den beiden Laufschaufeln (8) des Paars zu bringen;
- Weitergeben einer Drehung der Nockenscheibe (24) um die Achse (23), um die Laufschaufeln (8) des Paars **durch** elastische Deformation voneinander zu beabstanden;
- Messen des aufgebrachten Verdrill-Drehmoments; und
- Bilden eines reziproken Verhältnisses des aufgebrachten Drehmoments und des Verschleißes der Laufschaufeln (8) des Paars von Laufschaufeln (8), wobei der Verschleiß der wechselseitig gegenüberliegenden Oberflächen der zugehörigen Abschnitte (17) umso höher ist, je niedriger das aufgebrachte Verdrill-Drehmoment ist.

2. Ein Verfahren nach Anspruch 1, wobei ein Verdrill-Drehmoment an die Nockenscheibe (24) mittels eines Schafts (21) weitergegeben wird, der koaxial zu der Achse (23) angeordnet ist und der ein erstes freies Ende aufweist, das mit der Nockenscheibe (24) integral ausgeführt ist, wobei das Verdrill-Drehmoment mittels eines Drehmomentmessmittels (27) gemessen wird.

3. Ein Verfahren nach Anspruch 2, wobei das Blockieren der Achse (23) in einer bestimmten Position und mit einer bestimmten Orientierung bezüglich der Laufschaufeln (8) des Paars durch Blockieren einer röhrenförmigen Beschichtungshülle (22) in einem Bereich des Schafts (21) zwischen der Nockenscheibe (24) und dem Drehmomentmessmittel (27) in der Position und mit der Orientierung erfolgt, wobei der Schaft (21) mit der Hülle (22) zum Rotieren um die Achse (23) verbunden ist.

4. Ein Verfahren nach Anspruch 3, wobei das Blockieren der Hülle (22) in der Position und mit der Orientierung mittels erster und zweiter Positioniervorrichtungen (28, 29) erreicht wird, welche von der Hülle (22) getragen werden und die als erste und zweite Stützen dienen, die während der Messung bezüglich der Laufschaufeln (8) fixiert sind.

5. Ein Verfahren nach Anspruch 4, wobei das erste Stützmittel durch ein Paar benachbarter Abschnitte (17) eines Rings (16) der koaxial zu einer Achse (3) angeordneten Krone (7) definiert ist, wobei die erste Positioniervorrichtung (28) eine U-förmige Klammer (30) aufweist, die mit ihrer Konkavität der Nockenscheibe (24) zugewandt ist und die eine innere Bodenfläche (31) aufweist, und wobei die erste Positioniervorrichtung (28) mit dem Ring (16) dadurch verbunden ist, dass die Bodenfläche (31) mit einem Streifen-Rand (19) des Rings (16) in Kontakt ist.

6. Ein Verfahren nach Anspruch 5, wobei das zweite Stützmittel durch einen ringförmigen Körper definiert ist, der außerhalb der Krone (7) angeordnet ist und der einen ringförmigen, koaxial zu der Achse (3) angeordneten ringsteifenförmigen Rand (14) hat und der in einer Ebene senkrecht zu der Achse (3) angeordnet ist, und wobei die zweite Positioniervorrichtung (29) eine Ruheplatte (34) aufweist mit einer Längsachse (35) und einer oberen Oberfläche (38), auf der eine Vielzahl von Paaren von Nuten (40) parallel zu der Achse (35) angeordnet ist, und wobei die zweite Positioniervorrichtung (29) mittels der Nuten (40) an dem ringstreifenförmigen Rand (14) des ringförmigen Körpers (2) ausgerichtet ist.

7. Ein Verfahren nach Anspruch 6, wobei das zweite Positioniermittel (29) entlang der Hülle (22) verlagerbar ist und sobald es mit dem ringstreifenförmigen Rand (14) des ringförmigen Körpers (2) ausgerichtet ist, integral mit der Hülle (22) mittels einer Stellschraube (41) verbunden ist.

8. Ein Verfahren nach Anspruch 5, wobei das zweite Stützmittel durch einen ringförmigen Körper (2) definiert ist, der außerhalb der Krone (7) angeordnet ist und der einen ringförmigen, koaxial zu der Achse (3) orientierten ringstreifenförmigen Rand (14) aufweist und der in einer Ebene senkrecht zu der Achse (3) angeordnet ist, wobei die zweite Positioniervorrichtung (29) eine U-förmige Klammer (133) aufweist, die mit ihrer Konkavität der Nockenscheibe (24) zugewandt ist und die eine innere Bodenfläche (134) aufweist, und wobei die zweite Positioniervorrichtung (29) mit dem ringförmigen Körper (13) dadurch verbunden ist, dass die Bodenfläche (134) mit dem ringstreifenförmigen Rand (14) des ringförmigen Körpers (13) in Kontakt ist.

9. Eine Vorrichtung zum Messen des Verschleißes von Laufschaufeln (8) einer zumindest eine Stufe (27) mit einer Krone von Laufschaufeln aufweisenden Turbomaschine (1) im Betriebszustand, wobei jede Laufschaufel (8) einen zugehörigen Abschnitt (17) aufweist, der mit deren freien Ende verbunden ist, wobei die Vorrichtung umfasst einen Schaft (21), einer einen Teil des Schafts (21) abdeckenden Hülle (22), wobei der Schaft (21) drehbar mit der Hülle (22) verbunden ist, um bezüglich der Hülle (22) um eine koaxial zu der Hülle (22) angeordnete Achse (23) zu drehen, eine Nockenscheibe (24), die quer zu der Achse (23) und integral mit einem ersten Ende des Schafts (21) sich von der Hülle (22) erstreckt, wodurch die Nockenscheibe (24) fest mit dem Schaft (21) in einer exzentrischen Position bezüglich der Achse (23) verbunden ist, sich in einer Ebene senkrecht zu der Achse (23) erstreckt und lateral durch eine im Wesentlichen elliptische Laufschaufel-ähnliche Oberfläche (25) begrenzt ist und ist angepasst, um im Betriebszustand zwischen den Laufschaufeln (8) eines Paars von benachbarten Laufschaufeln (8) einer Krone (7) von Laufschaufeln (8) einer Stufe (6) der Turbomaschine (1) angeordnet zu sein, und ein Drehmomentmessmittel (27) und ein von einem zweiten Ende des Schafts (21) getragenes, von der Hülle (22) hervorstehendes Betriebselement (26), **dadurch gekennzeichnet, dass** die Vorrichtung Positioniermittel (28, 29) aufweist, die integral mit der Hülle (22) ausgeführt sind und angepasst sind, um mit äußeren Stützmitteln verbunden zu werden, um im Betriebszustand die Vorrichtung in einer bestimmten Position und mit einer bestimmten Orientierung bezüglich des Paars der Laufschaufeln (8) zu halten.

10. Eine Vorrichtung (20) nach Anspruch 9, wobei die Positionsmittel erste und zweite Positioniervorrichtungen (28, 29) aufweisen, die von der Hülle (22) getragen werden.

11. Eine Vorrichtung (20) nach Anspruch 10, wobei jede Positioniervorrichtung (28; 29) derart geformt ist, dass sie an einer korrespondierenden fixen Stütze anbringbar sind und eine Referenzoberfläche (31; 36; 134) aufweisen, die angepasst ist, um mit der korrespondierenden fixen Stütze in Kontakt zu kommen, um eine bestimmte Position und eine bestimmte Orientierung bezüglich der Laufschaufeln (8) des Paars von Laufschaufeln (8) an die Hülle (22) weiterzugeben, wobei der Verschleiß der Laufschaufeln (8) zu bestimmen ist.

12. Eine Vorrichtung (20) nach Anspruch 11, wobei die Positioniervorrichtung (28) ein U-förmiges Befestigungsmittel (30) aufweist, das angepasst ist, um auf die korrespondierende fixe Stütze zu passen, wobei die Referenzoberfläche eine innere Bodenfläche (31) des Befestigungsmittels (30) ist.

13. Eine Vorrichtung (29) nach Anspruch 11, wobei die Positioniervorrichtung (29) eine Ruheplatte (34) aufweist, die eine Vielzahl von Paaren von Nuten (40) zur Ausrichtung der Ruheoberfläche (36) davon mit der korrespondierenden fixen Stütze aufweist.

14. Eine Vorrichtung (20) nach Anspruch 11, wobei die Positioniervorrichtung (29) ein U-förmiges Befestigungsmittel (133) aufweist, das angepasst ist, um auf die korrespondierende fixe Stütze zu passen, wobei die Referenzoberfläche eine innere Bodenfläche (134) des Befestigungsmittels (133) ist.

15. Vorrichtung (20) nach Anspruch 11, wobei jede Positioniervorrichtung (28; 29) einen korrespondierenden Abstandshalter (32; 37; 135) aufweist.

## Revendications

1. Procédé de mesure de l'usure d'aubes (8) dans une turbomachine (1), chaque aube (8) comprenant un secteur respectif (17) relié à son extrémité libre ; le procédé comprenant les étapes suivantes :
- insérer une came plate (24), qui pivote autour d'un axe (23) normal à un plan de la came (24) elle-même, entre les aubes (8) d'une paire d'aubes adjacentes (8) d'une couronne d'aubes (8) d'un étage (6) de la turbomachine (1) ; le procédé étant **caractérisé par** les étapes suivantes :
- bloquer ledit axe (23) dans une certaine position par des moyens de positionnement (28, 29) et avec une certaine orientation par rapport aux aubes (8) de ladite paire ;
- faire tourner la came (24) autour dudit axe (23) pour mettre une surface active (25) de la came (24) elle-même en contact avec les deux aubes (8) de ladite paire ;
- communiquer une rotation à la came (24) autour dudit axe (23) pour espacer les aubes (8) de ladite paire par déformation élastique ;
- mesurer le couple de torsion appliqué ; et
- placer le couple appliqué et l'usure des aubes (8) de ladite paire d'aubes (8) dans un rapport réciproque ; dans lequel plus le couple de torsion appliqué est faible, plus l'usure des surfaces se faisant face réciproquement des secteurs (17) respectifs est élevée.

2. Procédé selon la revendication 1, dans lequel un couple de torsion est communiqué à la came (24) à l'aide d'un arbre (21) coaxial audit axe (23) et présentant une première extrémité libre formée intégralement avec la came (24) elle-même ; le couple de torsion étant mesuré à l'aide d'un couplemètre (27).

3. Procédé selon la revendication 2, dans lequel l'étape de bloquer ledit axe (23) dans une certaine position et avec une certaine orientation par rapport aux aubes (8) de ladite paire est obtenue par blocage, dans ladite position et avec ladite orientation, d'une gaine de revêtement tubulaire (22) dans une partie de l'arbre (21) entre la came (24) et le couplemètre (27) ; l'arbre (21) étant couplé à la gaine (22) pour tourner autour dudit axe (23).

4. Procédé selon la revendication 3, dans lequel le blocage de la gaine (22) dans ladite position et avec ladite orientation est obtenu à l'aide de premier et second dispositifs de positionnement (28, 29) qui sont portés par la gaine (22) et sont respectivement appliqués en utilisation sur des premier et second supports qui sont fixés par rapport aux aubes (8) pendant la mesure.

5. Procédé selon la revendication 4, dans lequel les premiers moyens de support sont définis par une paire de secteurs adjacents (17) d'un anneau (16) de la couronne (7) coaxial à un axe (3) ; le premier dispositif de positionnement (28) comprenant un support en forme de U (30), dont la concavité fait face à la came (24) et présentant une surface de fond intérieure (31) ; et le premier dispositif de positionnement (28) étant couplé à l'anneau (16) en mettant ladite surface de fond (31) en contact avec un bord de fuite (19) de l'anneau (16) lui-même.

6. Procédé selon la revendication 5, dans lequel les seconds moyens de support sont définis par un corps annulaire (2) disposé à l'extérieur de la couronne (7) et présentant un bord de fuite annulaire (14) coaxial à l'axe (3) et disposé sur un plan perpendiculaire à l'axe (3) lui-même ; et le second dispositif de positionnement (29) comprenant une plaque de repos (34) présentant un axe longitudinal (35) et une surface supérieure (38), sur laquelle une pluralité de paires d'encoches (40) est disposée parallèlement à l'axe (35) ; et le second dispositif de positionnement (29) étant aligné à l'aide d'encoches (40) avec le bord de fuite annulaire (14) du corps annulaire (2) lui-même.

7. Procédé selon la revendication 6, dans lequel le second dispositif de positionnement (29) peut translater le long de la gaine (22) et une fois aligné avec le bord de fuite annulaire (14) du corps annulaire (2), est relié de manière solidaire à la gaine (22) elle-même à l'aide d'une vis de réglage (41).

8. Procédé selon la revendication 5, dans lequel les seconds moyens de support sont définis par un corps annulaire (2) disposé à l'extérieur de la couronne (7) et présentant un bord de fuite annulaire (14) coaxial à l'axe (3) et disposé sur un plan perpendiculaire à l'axe (3) lui-même ; le second dispositif de positionnement (29) comprenant un support en forme de U (133), dont la concavité fait face à la came (24) et présentant une surface de fond intérieure (134) ; et le second dispositif de positionnement (29) étant couplé audit corps annulaire (13) en mettant ladite surface de fond (134) en contact avec le bord de fuite annulaire (14) du corps annulaire (13) lui-même.

9. Dispositif de mesure, lorsqu'il est en utilisation, de l'usure d'aubes (8) d'une turbomachine (1) avec au moins un étage (27) comprenant une couronne d'aubes, chaque aube (8) comprenant un secteur respectif (17) relié à son extrémité libre ; le dispositif comprenant un arbre (21) ; une gaine (22) recouvrant une partie de l'arbre (21) qui est couplé de façon pivotante à la gaine (22) afin de tourner par rapport à la gaine (22) autour d'un axe (23) de celle-ci coaxial à la gaine (22) ; une came (24) transversale audit axe (23) et formée intégralement avec une première extrémité de l'arbre (21) faisant saillie de la gaine (22), moyennant quoi la came (24) est fermement connectée à l'arbre (21) dans une position excentrée par rapport à l'axe (23), s'étend sur un plan perpendiculaire à l'axe (23) et est latéralement limitée par une surface de type came (25) sensiblement elliptique, et est adaptée pour être disposée en utilisation entre les aubes (8) d'une paire d'aubes adjacentes (8) d'une couronne (7) d'aubes (8) d'un étage (6) de la turbomachine (1) ; et un couplemètre (27) et un élément de fonctionnement (26) porté par une seconde extrémité de l'arbre (21) faisant saillie de la gaine (22) ; le dispositif étant **caractérisé en ce qu'**il comprend des moyens de positionnement (28, 29) solidaires de la gaine (22) et adaptés pour être couplés à des moyens de support extérieurs afin de maintenir en utilisation le dispositif (20) lui-même dans une certaine position et avec une certaine orientation par rapport à ladite paire d'aubes (8).

10. Dispositif (20) selon la revendication 9, dans lequel les moyens de positionnement comprennent des premier et second dispositifs de positionnement (28, 29) portés par la gaine (22).

11. Dispositif (20) selon la revendication 10, dans lequel chaque dispositif de positionnement (28 ; 29) est formé de sorte à pouvoir être appliqué sur le support fixe correspondant et présente une surface de référence (31 ; 36 ; 134) adaptée pour venir en contact avec le support fixe correspondant pour communiquer une certaine position et une certaine orientation à la gaine (22) par rapport aux aubes (8) de la paire d'aubes (8), dont il est destiné à déterminer l'usure.

12. Dispositif (20) selon la revendication 11, dans lequel le dispositif de positionnement (28) comprend un élément de fixation en forme de U (30) qui est adapté pour s'engager avec le support fixe correspondant ; ladite surface de référence étant une surface de fond intérieure (31) de l'élément de fixation (30).

13. Dispositif (20) selon la revendication 11, dans lequel le dispositif de positionnement (29) comprend une plaque de repos (34) présentant une pluralité de paires d'encoches (40) pour l'alignement de sa surface de repos (36) avec le support fixe correspondant.

14. Dispositif (20) selon la revendication 11, dans lequel le dispositif de positionnement (29) comprend un élément de fixation en forme de U (133) qui est adapté pour s'engager avec le support fixe correspondant ; ladite surface de référence étant une surface de fond intérieure (134) de l'élément de fixation (133).

15. Dispositif (20) selon la revendication 11, dans lequel chaque dispositif de positionnement (28, 29) comprend une entretoise correspondante (32 ; 37 ; 135).
